# EUROPEAN PATENT SPECIFICATION

(11) **EP 3 769 982 B1**
(45) Date of publication and mention of the grant of the patent: **01.11.2023**
(21) Application number: 20187123.3
(22) Date of filing: 22.07.2020
(51) Int. Cl.: B60G 15/06, B60G 17/00, B60K 5/12, F16F 9/54, F16F 13/10, F16F 13/26, F16F 15/00, B60G 13/00

(54) **METHOD OF GENERATING A FORCE FOR THE ACTIVE VIBRATION REDUCTION FOR A TOP SHOCK ABSORBER MOUNT OR FOR AN ENGINE SUSPENSION MOUNT AND VEHICLES**
VERFAHREN ZUR KRAFTERZEUGUNG ZUR AKTIVEN SCHWINGUNGSREDUZIERUNG FÜR EIN OBERES STOSSDÄMPFERLAGER ODER EIN MOTORENLAGER UND FAHRZEUGE
MÉTHODE DE GÉNÉRATION DE FORCE POUR UNE RÉDUCTION DE VIBRATION ACTIVE POUR UN SUPPORT SUPÉRIEUR D'AMORTISSEUR OU POUR UN SUPPORT DE SUSPENSION MOTEUR ET VÉHICULES

(30) Priority: 26.07.2019 IT 201900013020; 20.12.2019 IT 201900025024
(43) Date of publication of application: 27.01.2021
(73) Proprietor: DN AUTOMOTIVE ITALY S.R.L., 25050 Passirano (BS) (IT)
(72) Inventor: INHWAN, Kim, I-25050 Passirano, BRESCIA (IT); GAZZOLI, Gianenrico, I-25050 Passirano, BRESCIA (IT); MICHELI, Diego, I-25050 Passirano, BRESCIA (IT)
(74) Representative: De Lorenzo, Danilo

(56) References cited:
- EP-A1- 0 825 358
- DE-A1- 4 116 270
- DE-A1-102009 016 452
- JP-A- H06 312 616
- JP-A- H10 306 842
- US-A1- 2013 311 040
- US-A1- 2015 028 549

## Description

The present invention refers to a method of generating a forcing signal for the active vibration reduction for a top shock absorber mount or an engine suspension mount of a vehicle. Furthermore, the present invention relates to an active vibration reduction method and vehicles according to the appended independent claims.

Top shock absorber mounts are known for attaching the shock absorber to the body of the vehicle, e.g. to a dome of the body in the case of McPherson type suspension. Generally, the top shock absorber mount, which comprises a mount group onto which the shock absorber rod is anchored, further comprises an elastic element made of rubber, the function of which is to filter out vibrations which could be transmitted from the shock absorber to the body.

In the suspension, the shock absorber and the top mount, while being closely linked components, perform two different functions. The small stroke stresses are transmitted to the elastic element and the related vibrations are then absorbed by the element itself, while for higher displacements the shock absorber intervenes and the elastic element made of rubber takes the function of an additional filter.

Generally, the geometric shape and the specific components of the mount group and/or top shock absorber mount vary according to the vehicle to adapt to the specific static and dynamic features of the vehicle itself and of the shock absorbers. Examples of known passive vibration systems are shown in documents EP0825358A1, JPH06312616A, DE4116270A1, US2013/311040A1, DE102009016452A1, Document EP 0825358 A1 discloses a method of JPH10306842A. generating a forcing signal according to the preamble of claim 1. J

With the due structural mechanical modifications and mechanical constraints, similar technical expedients are also adopted in the case of engine suspension mounts, responsible for coupling the engine to the vehicle body.

Unfortunately, the aforesaid passive vibration damping systems, by means of elastic elements made of rubber, do not allow to attenuate the vibrations in a sufficiently effective manner under various running conditions of the vehicle and on various types of road surfaces (concrete, pavement, asphalt, dirt). Indeed, the passive damping elements are adjusted to damp the entire frequency range fairly and stably under various driving conditions of the vehicle without any discrimination towards the forcing forces and frequencies that attenuation the most need.

Furthermore, the systems of the prior art, due to residual vibrations, inconveniently do not allow the reduction of the noise generated by such vibrations, reducing the comfort in the passenger compartment, or requiring adequate passive soundproofing elements.

Therefore, the need is felt to provide a vibration damping method and system which can overcome the drawbacks of the prior art and effectively compensate for vibrations under different driving conditions of the vehicle and is suitable for the different types of vibration, stress and vehicle itself.

According to the invention, the aforesaid objects are achieved by a method of generating a forcing signal for active vibration reduction, by an active vibration reduction method for a top shock absorber mount or an engine suspension mount of a vehicle or vehicles according to the appended independent claims. Preferred embodiments of the invention are defined in the dependent claims.

The features and advantages of the method of generating a forcing signal for active vibration reduction, the active vibration reduction method and the vehicles will become apparent from the following description, given by way of non-limiting example, in accordance with the accompanying drawings, wherein:

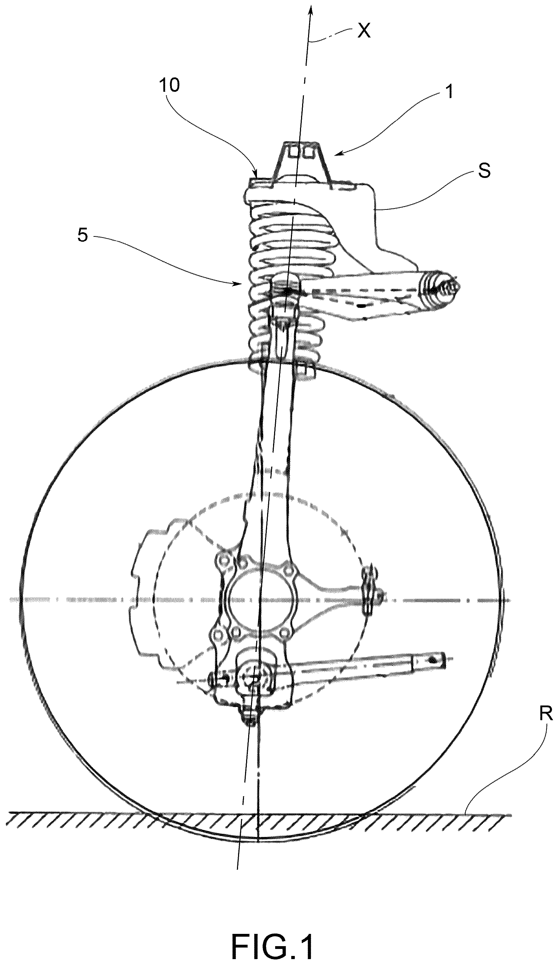

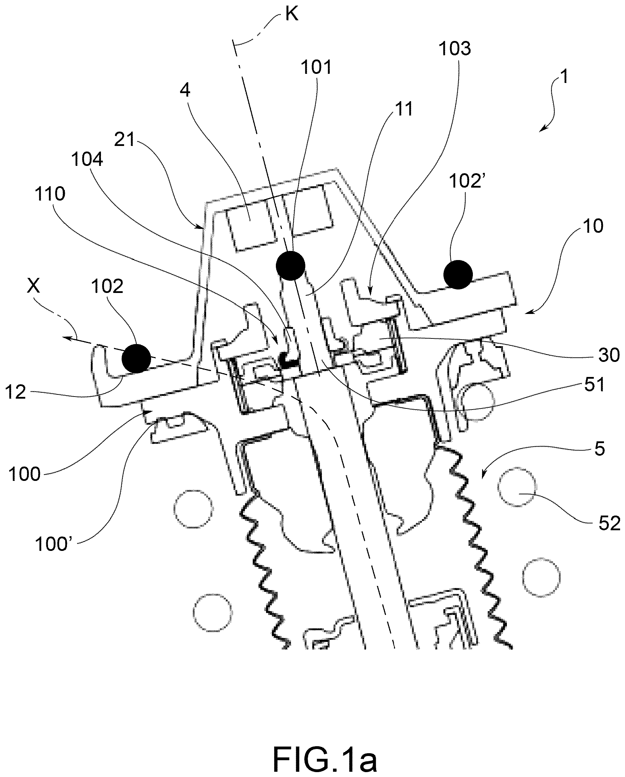

- figure 1 shows a side elevation view of an active vibration reduction system according to an embodiment of the present invention comprising an active vibration reduction apparatus mounted on a top shock absorber mount of a vehicle;
- figure 1a shows a section detail view of an active vibration reduction system according to an embodiment of the present invention comprising an active vibration reduction apparatus mounted on a top shock absorber mount of a vehicle;

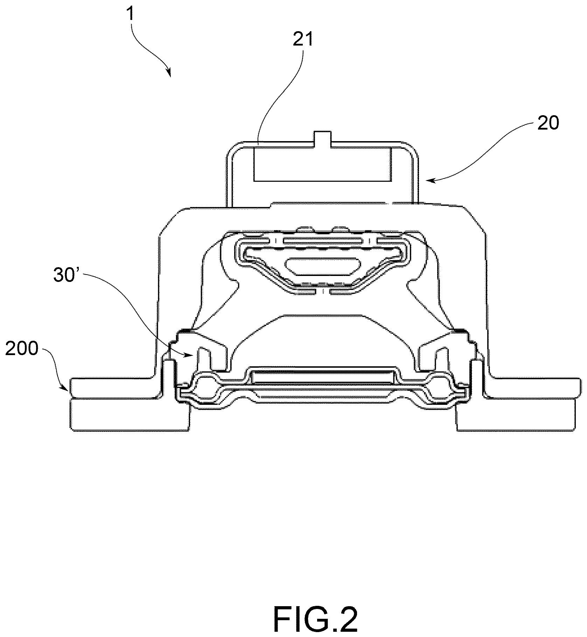

- figure 2 shows a section detail view of an active vibration reduction system according to an embodiment of the present invention comprising an active vibration reduction apparatus mounted on an engine suspension mount of a vehicle according to an embodiment of the present invention;
- figure 3 shows a block chart of the active vibration reduction method according to an embodiment of the present invention;
- figure 4 shows a block chart of the active vibration reduction method according to a second embodiment of the present invention;
- figure 5 shows a block chart of the active vibration reduction method according to a further embodiment of the present invention.

According to the accompanying drawings, reference numeral 1 indicates as a whole an active vibration reduction device for a top shock absorber mount 10 or an engine suspension mount 20 of a vehicle. The top shock absorber mount 10 is known in the vehicle industry and is a device suitable to connect a shock absorber 5 to the body S of a vehicle, particularly of a motor vehicle.

In an embodiment, the top mount 10 comprises a support 100 anchorable to the body S of the vehicle. Preferably, the support 100 is a metal structure obtained by die-casting in which a housing 110, arranged about a shock absorber axis K, is obtained. Preferably, the support 100 comprises an annular flange 100' intended to be anchored to the body S of the vehicle, preferably by means of appropriate screws or bolt fasteners.

Preferably, the support 100 is suitable to receive directly or indirectly the bias of a coil spring 52 placed coaxially to the shock absorber axis K.

The top shock absorber mount 10 comprises a mount group 103 which is at least partially or totally enclosed in housing 100 and locked in said housing 110, e.g. by interference with the walls of housing 110 or by means of fixing means known to those skilled in the art.

The mount group 103 comprises a connection element 104 suitable to be connected to a rod 51 of the shock absorber 5 and comprises a rod hole suitable to accommodate the rod 51 of the shock absorber 5.

According to the invention the top shock absorber mount 10 comprises a passive vibration damping element 30, e.g. a resilient element, such as a rubber element, suitable to be interposed in the transmission of vibrations between the shock absorber rod 51 and the body S of the vehicle. In particular, the passive damping element 30 is arranged coaxially to the shock absorber axle K and at least partially incorporates the connection element 104.

In particular, the passive damping element 30 incorporates only a peripheral annular portion of the connection element 104.

The engine suspension mount 20 is also a known device in the vehicle industry and is suitable to connect a vehicle engine or motor (e.g. an electric motor or a heat engine) to the body S of the vehicle. The engine suspension mount further comprises at least one passive vibration damping element 30', e.g. a rubber element suitable to damp vibrations from the engine to the body S of the vehicle.

The present invention related to a method of generating a forcing signal u3 for the active vibration reduction for a top shock absorber mount 10 or a vehicle engine suspension mount 20, e.g. of the type described above.

To understand the steps of the method, the apparatus and the system which will be described hereinafter in the description, a direction of propagation of vibrations X is defined as the direction which proceeds from the road surface R on which the vehicle runs towards the body S of the vehicle, passing through the passive damping element 30, or as the direction which proceeds from the motor of the vehicle towards the body S of the vehicle passing through the passive damping element 30' of the engine suspension mount.

According to the present invention the method of generating a forcing signal u3 comprises the steps of:

a) detecting a first signal or datum dm relating to the acceleration of a first region 11 of the vehicle subjected to vibrations upstream of the passive vibration damping element 30, 30' in the direction of propagation of the vibrations X;

b) detecting a second signal or datum y relating to the acceleration of a second region 12 of the vehicle or the top shock absorber mount 10 or the vehicle engine suspension mount 20.

The second region 12 is subjected to vibrations downstream of the passive damping element 30, 30' of the vibrations 30 in the vibration propagation direction X.

In other words, in step a) the vibrations from the engine or road surface are detected before they reach the passive vibration damping element 30, 30', while in step b) the vibrations downstream of the passive vibration damping element 30, 30' are detected.

The method further comprises the step c) of generating a forcing signal u3 as a function of the first signal or datum dm and the second signal or datum y. The forcing signal u3 is suitable to activate a vibrator device A to compensate for the vibrations acting on the first region 11 and/or the second region 12 fully or only partially. The step c) is performed on an electronic unit, programmed to execute the step c) of the method. According to the invention, the electronic unit further comprises means for the acquisition of the first d or second signal or datum y.

According to the invention, step c) comprises, on the electronic unit, the steps of:
c1) providing a numerical model M configured to simulate the mechanical response of the passive damping element 30, 30' as a function of the first signal or datum dm relative to the acceleration of the first region 11;
c2) by means of the numerical model M, generating a simulated signal or datum u1 related to an acceleration simulated by the numerical model M as a function of the first signal or datum dm;
c3) generating a forcing signal u3 according to the first signal or datum dm, the second signal or datum y and the simulated signal or datum u1.

According to an embodiment of the method, step c3) comprises the step of subtracting the second signal or datum y from a predetermined residual error value y0 to obtain an error value measured e and algebraically add the measured error value e or a processing u2 thereof with the simulated signal or datum u1.

Preferably, step c2) comprises the step of filtering the first signal or datum dm to generate a filtered signal or datum df comprising only frequency components in a predetermined frequency range, subset of the frequency range of the first signal or datum dm.

According to a variant, the method comprises the step of detecting at least one third signal or datum s1, s2 relating to a vibration of a third region of the vehicle subjected to vibrations upstream of the passive vibration damping element 30, 30' in the direction of propagation of the vibrations X. In this variant, by means of the numerical model M, the method provides generating a simulated signal or datum u1 relative to an acceleration simulated by the numerical model M as a function of the first signal or datum dm and the third signal or datum s1, s2.

According to the invention, the numerical model M is a mathematical function comprising a temperature parameter. Preferably the numerical model is a mathematical function further comprising a rigidity parameter of the passive damping element 30, 30' and/or a vehicle speed parameter. In this case, the method comprises the step of detecting a signal related to the vehicle speed and/or temperature T and/or rigidity of a region of the vehicle and/or the passive damping element 30, 30' and/or the top shock absorber mount 10 or the engine suspension mount 20 and providing the signal related to the vehicle speed and/or temperature T and/or rigidity of the passive damping element 30, 30' to the numerical model M to generate the signal or simulated data u1 as a function of the temperature T signal and/or the rigidity of the passive damping element 30, 30' and/or the vehicle speed signal.

This further allows the numerical model M related to the passive damping element 30, 30' to be updated on the basis of its temperature and/or operating rigidity and/or vehicle speed. In the case of a passive damping element 30, 30' made of a resilient material, e.g. rubber, this allows variations in the behavior of the vibration resilient material as a function of the temperature and/or rigidity of the passive damping element 30, 30' and/or of the vehicle speed to be taken into account in the model, thus obtaining a simulated signal or datum u1 with improved accuracy of approximation of the real vibration ds of the upper shock absorber support downstream of the passive damping element 30, 30'.

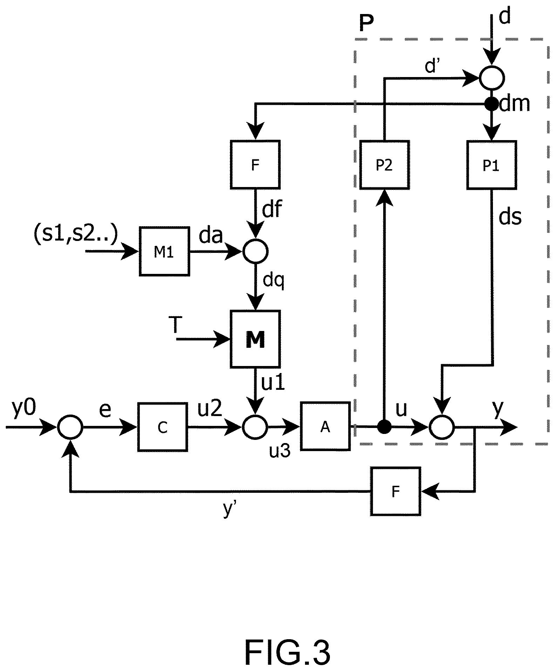

A variant of the forcing signal generation method u3 is shown in the diagram in figure 3.

The dotted box P encloses the actual system consisting of the shock absorber and passive damping element. In detail, a component d' given by the action of the actuator A (vibrator), which is retransmitted to the top shock absorber mount through the passive damping element 30 (process indicated by block P2) is added to the signal d, in this case an acceleration on the shock absorber rod 51. The sum of these two components d and d' is the first signal or datum dm which is preferably measured by a first vibration detector 101, e.g. an accelerometer. The first signal or datum dm is processed by a filtering block F which extracts the frequency components in a predetermined frequency range. The output signal thus filtered df is possibly added to a third signal or data s1, s2 detected by other devices. In particular, the third signal or datum s1, s2 is processed through an M1 processing block, preferably configured to take into account and/or simulate components of the shock absorber rod 51. The sum signal dq thus generated, is inputted to the numerical model M, the behavior of which possibly depends also on the temperature T and/or the rigidity of the passive damping element 30, 30' detected and/or the speed of the vehicle, as described above. At the output from the numerical model M, a control signal u1 is generated which represents the estimate of the real vibration ds downstream of the passive damping element 30 by the propagation of the signal dm through the real passive damping element 30, indicated by block P1. Preferably, the control signal u1 is sent as a command to actuator A to generate an opposite vibration that compensates for the actual vibration ds.

Preferably, the second measured signal or datum y, which represents the residual vibration of the upper damper support (or vehicle body S) downstream of the passive damping element 30 is measured by a second vibration detector 102, 102'. Such second measured signal or datum y' is processed by a second filtering block F' which performs an appropriate selection of a frequency range of interest and generates at the output a second filtered signal or datum y', suitable to be used as feedback for the generation of the forcing signal u3, intended to be sent to actuator A.

In particular, the second filtered signal or datum y' is algebraically added (preferably subtracted) from a predetermined residual error value y0 to obtain an error value measured e and algebraically adding the measured error value e or a processing u2 thereof with the simulated signal or datum u1. In particular, the measured error value is sent to a controller block C which generates a second control signal u2 which is algebraically added to the simulated signal or datum u1 to obtain the forcing signal u3.

In other words, preferably the predetermined residual error y0 and the measured error and respectively indicate the permissible residual vibration component and the error between the latter and the measured vibration component.

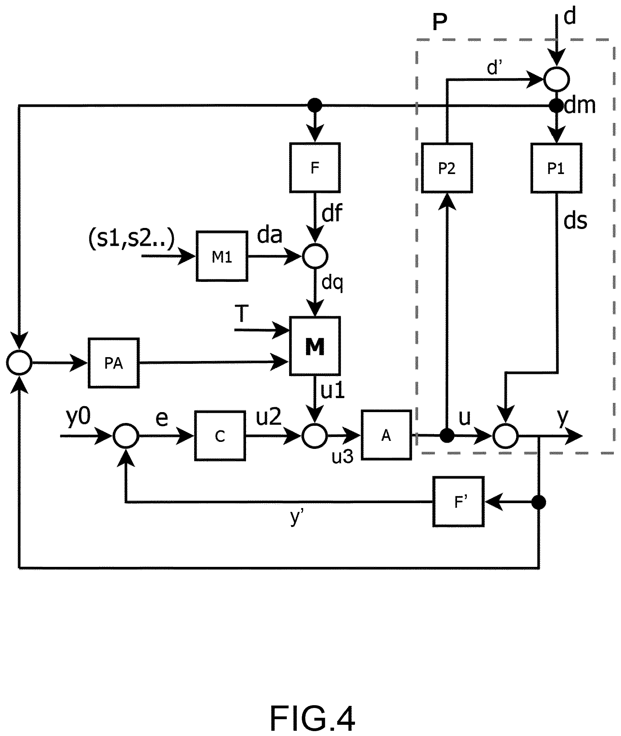

According to a further variant of embodiment, e.g. shown in figure 4, the generating method the forcing signal u3 comprises the step of updating the numerical model M according to processing of the first signal or datum dm and the second signal or datum y. Preferably, such processing of the first signal or datum dm and the second signal or datum y del comprises the step of algebraically adding the first signal or datum dm and the second signal or datum y.

In particular, as shown in figure 4, according to a variant, the combination (e.g. sum) of the first signal or datum dm with the second signal or datum y is sent to an input to a processing process PA configured to generate updated parameters of the numerical model M of the passive damping element 30, 30'. The updated parameters of the numerical model M coming out of the PA processing process are then used to update the numerical model M to make vibration compensation more effective.

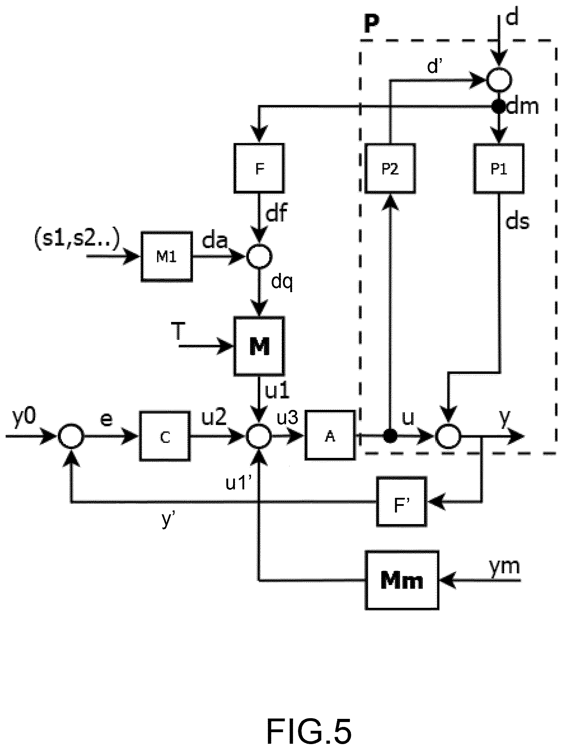

According to a further variant of the method, e.g. shown in figure 5, the forcing signal generation method u3 comprises the step of detecting a passenger compartment noise signal ym by means of a microphone placed near or in the passenger compartment of the vehicle.

In this variant, the method comprises the step of generating the forcing signal u3 as a function of the passenger compartment noise signal ym (or its processing), from a microphone placed near or in the passenger compartment of the vehicle. Preferably, in this variant, the forcing signal u3 is generated as a function of the first signal or datum dm, the second signal or datum y and the simulated signal or datum u1.

Preferably, the method of generating the forcing signal u3 comprises the step of updating the numerical model M or a numerical noise model Mm, as a function of a passenger compartment noise signal ym (or its processing), from a microphone placed near or in the passenger compartment of the vehicle and the first signal or dm data (i.e. the vibration measured by the first vibration detector 101).

Preferably, the numerical noise model Mm is a numerical model suitable to receive in input the passenger compartment noise signal ym measured in the passenger compartment of the vehicle from the microphone.

In particular, as shown in figure 5, according to a variant, the passenger compartment noise signal ym measured in the passenger compartment of the vehicle by the microphone is sent to the numerical noise model Mm which generates in output a fourth control signal u1', which is preferably algebraically added to the simulated signal or datum u1 and/or to the second control signal u2, to obtain the forcing signal u3 suitable to reduce or cancel the vibrational components that produce noise in the passenger compartment.

The present invention further relates to an active vibration reduction method for a top shock absorber mount 10 or an engine suspension mount 20 of a vehicle, comprising the steps of the method of generating a forcing signal u3 according to any one of the preceding claims and the step of applying a mechanical contrasting action to the vibrations on the vehicle or the top shock absorber mount 10 or on the vehicle engine suspension mount 20 as a function of the forcing signal u3. Preferably, the step of applying the mechanical action is directly performed on the support 100 of the upper shock absorber support.

The present invention further relates to a vehicle comprising an active vibration reduction apparatus 1 comprising a top shock absorber mount 10 or an engine suspension mount 20 of the vehicle, each comprising at least one passive vibration damping element 30, 30'.

The apparatus comprises the first vibration detector 101 suitable to detect the first signal or data dm related to the acceleration of the first region 11 of the vehicle. Furthermore, the apparatus comprises the second vibration detector 102, 102' suitable to detect the second signal or datum y relating to the acceleration of a second region 12 of the vehicle or the top shock absorber mount 10 or the vehicle engine suspension mount 20.

The apparatus further comprises the electronic unit, suitable to generate the forcing signal u3 as a function of the first signal or datum dm and the second signal or datum y, and the actuator A, 4, e.g. a vibrator, suitable to receive the forcing signal u3 and to generate a mechanical action against vibrations as a function of the received forcing signal u3.

Preferably, the first vibration detector 101 and the second vibration detector 102, 102' are accelerometers.

Furthermore, according to a variant, the apparatus comprises a microphone (not shown) suitable to be placed inside the passenger compartment of the vehicle and configured to detect the passenger compartment noise signal ym.

According to the invention, a vehicle comprises an active vibration reduction system comprises the top shock absorber mount 10, comprising the support 100 anchorable to the vehicle body S and at least the passive vibration damping element 30, and the shock absorber 5 comprising the shock absorber rod 51, connected to the top shock absorber mount 10. The active reduction system further comprises the active vibration reduction apparatus 1 described in the previous paragraphs of this section. In this active vibration reduction system, the first vibration detector 101 is connected to the first region 11 of the vehicle subjected to vibrations upstream of the passive damping element of the vibrations 30 in the direction of propagation of the vibrations, e.g. is connected to the shock absorber rod 51. Furthermore, the second vibration detector 102, 102' is connected to the second region 12 of the vehicle or the top shock absorber mount 10 subjected to vibrations downstream of the passive damping element 30, 30' of the vibrations in the direction of propagation of vibrations X, e.g. it is connected to the support 100 of the top shock absorber mount 10 or in a region close to the support 100, e.g. on the annular flange 100' intended to be anchored to the body S of the vehicle.

The actuator 4, A, e.g. a vibrator, is connected to the second region 12 of the vehicle or of the top shock absorber mount 10 to generate a mechanical action to contrast the vibrations as a function of the received forcing signal u3.

Preferably, the active vibration reduction system comprises an apparatus frame 21, joined to the top shock absorber mount 10 or the engine suspension mount 20, on which the actuator 4 is housed spaced apart with respect to the body S of the vehicle and/or with respect to the support 100 of the top shock absorber mount 10.

Furthermore, a vehicle according to the invention comprises a vibration reduction system which comprises an engine suspension mount 20 comprising a support bracket 200 anchorable to the body S of the vehicle and at least one passive vibration damping element 30'. This active vibration reduction system thus comprises the same components as described for the system comprising the top shock absorber mount 10 but is applied to an engine suspension mount.

Preferably, the active vibration reduction system further comprises the microphone installed in the passenger compartment of the vehicle configured to detect the passenger compartment noise signal ym.

Innovatively, the present invention allows to overcome the drawbacks of the prior art, and in particular to effectively compensate for vibrations under different driving conditions of the vehicle, whether they are vibrations from the road through the shock absorbers or vibrations due to engine operation.

In particular, innovatively, the present invention allows to compensate for vibration components that the passive damping element cannot compensate for itself, e.g. because it is not designed to compensate for such vibration components. This applies predominantly in the case of a top shock absorber support, for which it is not possible to design a passive damping element to damp any vibrational component from the road under any behavioral conditions.

Furthermore, the possibility of compensating for the noise measured by a microphone in the passenger compartment by damping the vibrational components which generate the noise by acting directly on the support 100 anchorable to the body S by means of actuator 4, allows a quick, simple and effective response to the felt need to increase comfort and silence in the passenger compartment, without the need for additional active or passive acoustic devices installed in the passenger compartment.

Furthermore, by virtue of the presence of a numerical model of the passive damping element, it is possible to predict what is the mechanical response of the real passive damping element and, therefore, to predict the forcing signal to be generated to counteract the residual vibrational component downstream of the passive damping element.

Furthermore, advantageously, the possibility of updating the numerical model according to the temperature and/or the rigidity of the passive damping element and/or the speed of the vehicle, but also the combination between the second signal or data detected y and the first signal or data detected dm, ensures that the prediction and generation of the forcing signal are more effective in its vibration compensating action.

In order to meet contingent needs, it is apparent that those skilled in the art may make changes to the invention described above, all of which are contained within the scope of protection as defined in the following claims.

## Claims

1. A method of generating a forcing signal (u3) for the active vibration reduction for a top shock absorber mount (10) or for an engine suspension mount (20) of a vehicle, said method comprising the steps of:
providing the vehicle having the top shock absorber mount (10) or the engine suspension mount (20), said top shock absorber mount (10) or said engine suspension mount (20) of the vehicle comprising at least one passive vibration damping element (30, 30'), such as a rubber element,
wherein, having defined a direction of propagation of vibrations (X), such as the direction which proceeds from the road surface (R) on which the vehicle runs towards the body (S) of the vehicle, passing through the passive damping element (30), or as the direction which proceeds from the motor of the vehicle towards the body (S) of the vehicle passing through the passive damping element (30'),
said method comprises the steps of:
a) detecting a first signal or datum (dm) relating to the acceleration of a first region (11) of the vehicle subjected to vibrations upstream of the passive vibration damping element (30, 30') in the direction of propagation of the vibrations (X);
b) detecting a second signal or datum (y) relating to the acceleration of a second region (12) of the vehicle or of the top shock absorber mount (10) or of the engine suspension mount (20) of the vehicle, said second region (12) being subjected to vibrations downstream of the passive damping element (30, 30') of the vibrations (30) in the direction of propagation of the vibrations (X);
c) on an electronic unit, generating a forcing signal (u3) as a function of the first signal or datum (dm) and of the second signal or datum (y), said forcing signal (u3) being suitable to activate a vibrator device (A) to compensate for the vibrations acting on the first region (11) and/or on the second region (12) at least partially,
**characterized in that**
the step c) comprises, on the electronic unit, the steps of:
c1) providing a numerical model (M) configured to simulate the mechanical response of the passive damping element (30, 30') as a function of the first signal or datum (dm) relative to the acceleration of the first region (11);
c2) by means of the numerical model (M), generating a simulated signal or datum (u1) related to an acceleration simulated by the numerical model (M) as a function of the first signal or datum (dm);
c3) generating a forcing signal (u3) as a function of the first signal or datum (dm), of the second signal or datum (y) and of the simulated signal or datum (u1),
wherein said numerical model (M) is a mathematical function comprising a temperature parameter of the passive damping element (30, 30') and
wherein the method comprises the step of detecting a signal relating to the temperature (T) of a region of the vehicle and/or of the passive damping element (30, 30') and/or of the top shock absorber mount (10) or of the engine suspension mount (20) and supplying the temperature signal (T) to the numerical model (M) to generate the simulated signal or datum (u1) as a function of the temperature signal (T).

2. A method of generating a forcing signal (u3) according to claim 1, wherein before step c), the method comprises the step of:
b1) detecting a passenger compartment noise signal (ym) by means of a microphone placed near or inside the passenger compartment of the vehicle;
and in which, in step c) the step of generating the forcing signal (u3) provides generating the forcing signal (u3) as a function of the first signal or data (dm), the second signal or datum (y) and of the passenger compartment noise signal (ym).

3. A method of generating a forcing signal (u3) according to claim 1, wherein step c3) comprises the step of subtracting the second signal or datum (y) from a predetermined residual error value (y0) to obtain an error value measured (e) and algebraically add the measured error value (e) or processing (u2) thereof with the simulated signal or datum (u1).

4. A method of generating a forcing signal (u3) according to claim 1 or 3, wherein step c2) comprises the step of filtering the first signal or datum (dm) to generate a filtered signal (df) comprising only frequency components in a predetermined frequency range, which is a subset of the frequency range of the first signal or datum (dm).

5. A method of generating a forcing signal (u3) according to claim 1 or 3 or 4, comprising the step of detecting at least one third signal or datum (s1, s2) relating to a vibration of a third region of the vehicle subjected to vibrations upstream of the passive vibration damping element (30, 30') in the direction of propagation of the vibrations (X), and, by means of the numerical model (M), generating a simulated signal or datum (u1) relative to an acceleration simulated by the numerical model (M) as a function of the first signal or datum (dm) and the third signal or datum (s1, s2).

6. A method of generating a forcing signal (u3) according to any one of the claims 1 to 5, wherein the numerical model (M) is a mathematical function comprising a rigidity parameter of the damping element of the passive damping element (30, 30') and wherein the method comprises the step of detecting a signal relating to the rigidity of the passive damping element (30, 30') and supplying the signal relating to the rigidity of the passive damping element (30, 30') to the numerical model (M) to generate the simulated signal or datum (u1) as a function of the signal relating to the rigidity of the passive damping element (30, 30').

7. A method of generating a forcing signal (u3) according to any one of the claims from 1 to 5, wherein the numerical model (M) is a mathematical function comprising a vehicle speed parameter and wherein the method comprises the step of detecting a signal relating to the vehicle speed and of supplying the signal relating to the vehicle speed to the numerical model (M) for generating the simulated signal or datum (u1) as a function of the signal relating to the vehicle speed.

8. A method of generating a forcing signal (u3) according to claims 6 and 7.

9. A method of generating a forcing signal (u3) according to any one of the preceding claims, comprising the step of updating the numerical model (M) as a function of processing of the first signal or datum (dm) and the second signal or datum (y).

10. A method of generating a forcing signal (u3) according to claim 9, wherein the step of updating the numerical model (M) as a function of processing the first signal or datum (dm) and the second signal or datum (y) comprises the step of algebraically adding the first signal or datum (dm) and the second signal or datum (y).

11. An active vibration reduction method for a top shock absorber mount (10) or an engine suspension mount (20) of a vehicle, comprising the steps of the method of generating a forcing signal (u3) according to any one of the preceding claims and the step of applying a mechanical contrasting action to the vibrations on the vehicle or the top shock absorber mount (10) or the vehicle engine suspension mount (20) as a function of the forcing signal (u3).

12. A vehicle comprising a top shock absorber mount (10) or an engine suspension mount (20), said top shock absorber mount (10) or said engine suspension mount (20) of the vehicle comprising at least one passive vibration damping element (30, 30'), such as a rubber element, and said vehicle comprising an active vibration reduction apparatus (1) for said top shock absorber mount (10) or said engine suspension mount (20), said apparatus (1) comprising:
- a first vibration detector (101) suitable for detecting a first signal or datum (dm) relating to the acceleration of a first region (11) of the vehicle subjected to vibrations upstream of the passive vibration damping element (30, 30') in the direction of propagation of the vibrations (X);
- a second vibration detector (102, 102') suitable for detecting a second signal or datum (y) relating to the acceleration of a second region (12) of the vehicle or of the top shock absorber mount (10) or of the engine suspension mount (20) of the vehicle, said second region (12) being subjected to vibrations downstream of the passive damping element (30, 30') of the vibrations (30) in the direction of propagation of the vibrations (X);
- an electronic unit comprising means for the acquisition of the first signal or datum (dm) or second signal or datum (y) and configured for generating a forcing signal (u3) as a function of the first signal or datum (dm) and of the second signal or datum (y) by means of step c1) to c3) of the method according to any one of claims 1 to 10;
- an actuator (4), for example a vibrator, suitable for receiving the forcing signal (u3) and suitable for generating a mechanical action to contrast the vibrations as a function of the received forcing signal (u3).

13. A vehicle comprising an active vibration reduction system comprising:
- a top shock absorber mount (10), said top shock absorber mount (10) comprising a support (100) anchorable to the body (S) of the vehicle and at least one passive vibration damping element (30);
- a shock absorber (5) comprising a shock absorber rod (51), connected to the top shock absorber mount (10);
- an active vibration reduction apparatus (1) for said top shock absorber mount (10) comprising:
- a first vibration detector (101) suitable for detecting a first signal or datum (dm) relating to the acceleration of a first region (11) of the vehicle subjected to vibrations upstream of the passive vibration damping element (30) in the direction of propagation of the vibrations (X);
- a second vibration detector (102, 102') suitable for detecting a second signal or datum (y) relating to the acceleration of a second region (12) of the vehicle or of the top shock absorber mount (10) of the vehicle, said second region (12) being subjected to vibrations downstream of the passive damping element (30) of the vibrations (30) in the direction of propagation of the vibrations (X);
- an electronic unit comprising means for the acquisition of the first signal or datum (dm) or second signal or datum (y) and configured for generating a forcing signal (u3) as a function of the first signal or datum (dm) and of the second signal or datum (y) by means of step c1) to c3) of the method according to any one of claims 1 to 10;
- an actuator (4), for example a vibrator, suitable for receiving the forcing signal (u3) and suitable for generating a mechanical action to contrast the vibrations as a function of the received forcing signal (u3);
wherein the first vibration detector (101) is connected to the first region (11) of the vehicle subjected to vibrations upstream of the passive damping element of the vibrations (30) in the direction of propagation of the vibrations;
wherein the second vibration detector (102, 102') is connected to the second region (12) of the vehicle or of the top shock absorber mount (10) subjected to vibrations downstream of the passive damping element (30, 30') of the vibrations (30) in the direction of propagation of the vibrations (X);
and wherein the actuator (4), is connected to the second region (12) of the vehicle or of the top shock absorber mount (10) to generate a mechanical action to contrast the vibrations as a function of the received forcing signal (u3).

14. A vehicle according to claim 13, wherein the first vibration detector (101) is connected to the shock absorber rod.

15. A vehicle according to claim 13 or 14, comprising an apparatus frame (21), joined to the top shock absorber mount (10), on which the actuator (4) is housed spaced apart with respect to the body (S) of the vehicle and/or with respect to the support (100) of the top shock absorber mount (10).

16. A vehicle comprising an active vibration reduction system comprising:
- an engine suspension mount (20), said engine suspension mount (20) comprising a mount support (200) anchorable to the body (S) of the vehicle and at least one passive damping element (30') of the vibrations;
- an active vibration reduction apparatus (1) for said engine suspension mount (20) comprising:
- a first vibration detector (101) suitable for detecting a first signal or datum (dm) relating to the acceleration of a first region (11) of the vehicle subjected to vibrations upstream of the passive vibration damping element (30') in the direction of propagation of the vibrations (X);
- a second vibration detector (102, 102') suitable for detecting a second signal or datum (y) relating to the acceleration of a second region (12) of the vehicle or of the engine suspension mount (20) of the vehicle, said second region (12) being subjected to vibrations downstream of the passive damping element (30') of the vibrations (30) in the direction of propagation of the vibrations (X);
- an electronic unit comprising means for the acquisition of the first signal or datum (dm) or second signal or datum (y) and configured for generating a forcing signal (u3) as a function of the first signal or datum (dm) and of the second signal or datum (y) by means of step c1) to c3) of the method according to any one of claims 1 to 10;
- an actuator (4), for example a vibrator, suitable for receiving the forcing signal (u3) and suitable for generating a mechanical action to contrast the vibrations as a function of the received forcing signal (u3);
wherein the first vibration detector (101) is connected to the first region (11) of the vehicle subjected to vibrations upstream of the passive vibration damping element (30, 30') in the direction of propagation of the vibrations;
wherein the second vibration detector (102, 102') is connected to the second region (12) of the vehicle or of the engine suspension mount (20);
and wherein the actuator (4), for example a vibrator, is connected to the second region (12) of the vehicle or of the engine suspension mount (20) to generate a mechanical action to contrast the vibrations as a function of the received forcing signal (u3).

## Patentansprüche

1. Ein Verfahren zum Erzeugen eines Erzwingungssignals (u3) für die aktive Schwingungsreduzierung für ein oberes Stoßdämpferlager (10) oder für ein Motoraufhängungslager (20) eines Fahrzeugs, wobei das Verfahren die folgenden Schritte umfasst:
Bereitstellen des Fahrzeugs mit dem oberen Stoßdämpferlager (10) oder dem Motoraufhängungslager (20), wobei das genannte obere Stoßdämpferlager (10) oder das genannte Motoraufhängungslager (20) des Fahrzeugs mindestens ein passives Schwingungsdämpfungselement (30, 30'), wie beispielsweise ein Gummielement, umfasst,
wobei, nachdem eine Ausbreitungsrichtung von Schwingungen (X) definiert wurde, als die Richtung, die von der Straßenoberfläche (R), auf der das Fahrzeug fährt, in Richtung der Karosserie (S) des Fahrzeugs verläuft und durch das passive Dämpfungselement (30) hindurchgeht, oder als die Richtung, die vom Motor des Fahrzeugs in Richtung der Karosserie (S) des Fahrzeugs verläuft und durch das passive Dämpfungselement (30') hindurchgeht,
das genannte Verfahren die folgenden Schritte umfasst:
a) Erfassen eines ersten Signals oder Datenwerts (dm), der sich auf die Beschleunigung eines ersten Bereichs (11) des Fahrzeugs bezieht, der stromaufwärts vom passiven Schwingungsdämpfungselement (30, 30') in Ausbreitungsrichtung der Schwingungen (X) Schwingungen ausgesetzt ist;
b) Erfassen eines zweiten Signals oder Datenwerts (y), der sich auf die Beschleunigung eines zweiten Bereichs (12) des Fahrzeugs oder des oberen Stoßdämpferlagers (10) oder des Motoraufhängungslagers (20) des Fahrzeugs bezieht, wobei der genannte zweite Bereich (12) stromabwärts des passiven Dämpfungselements (30, 30') der Schwingungen (30) in der Ausbreitungsrichtung der Schwingungen (X) Schwingungen ausgesetzt ist;
c) Erzeugen, auf einer elektronischen Einheit, eines Erzwingungssignals (u3) als Funktion vom ersten Signal oder Datenwert (dm) und vom zweiten Signal oder Datenwert (y), wobei das genannte Erzwingungssignal (u3) dazu geeignet ist, eine Schwingungsvorrichtung (A) zu aktivieren, um die auf den ersten Bereich (11) und/oder auf den zweiten Bereich (12) wirkenden Schwingungen zumindest teilweise zu kompensieren,
**dadurch gekennzeichnet, dass**
der Schritt c) auf der elektronischen Einheit die folgenden Schritte umfasst:
c1) Bereitstellen eines numerischen Modells (M), das so konfiguriert ist, dass es die mechanische Antwort des passiven Dämpfungselements (30, 30') als Funktion des ersten Signals oder Datenwerts (dm) relativ zur Beschleunigung des ersten Bereichs (11) simuliert;
c2) mittels des numerischen Modells (M), Erzeugen eines simulierten Signals oder Datenwerts (u1) bezüglich einer Beschleunigung, die durch das numerische Modell (M) als eine Funktion des ersten Signals oder Datenwerts (dm) simuliert wird;
c3) Erzeugen eines Erzwingungssignals (u3) als eine Funktion des ersten Signals oder Datenwerts (dm), des zweiten Signals oder Datenwerts (y) und des simulierten Signals oder Datenwerts (u1),
wobei das genannte numerische Modell (M) eine mathematische Funktion ist, die einen Temperaturparameter des passiven Dämpfungselements (30, 30') umfasst, und wobei das Verfahren den Schritt des Erfassens eines Signals umfasst, das sich auf die Temperatur (T) eines Bereichs des Fahrzeugs und/oder des passiven Dämpfungselements (30, 30') und/oder des oberen Stoßdämpferlagers (10) oder des Motoraufhängungslagers (20) bezieht, und des Zuführens des Temperatursignals (T) zu dem numerischen Modell (M), um das simulierte Signal oder den Datenwert (u1) als eine Funktion des Temperatursignals (T) zu erzeugen.

2. Ein Verfahren zum Erzeugen eines Erzwingungssignals (u3) nach Anspruch 1, wobei das Verfahren vor Schritt c) den folgenden Schritt umfasst:
b1) Erfassen eines Fahrgastraum-Geräuschsignals (ym) mittels eines Mikrofons, das in der Nähe oder im Inneren des Fahrgastraums des Fahrzeugs angeordnet ist;
und in dem in Schritt c) der Schritt des Erzeugens des Erzwingungssignals (u3) das Erzeugen des Erzwingungssignals (u3) als eine Funktion des ersten Signals oder Datenwerts (dm), des zweiten Signals oder Datenwerts (y) und des Fahrgastraum-Geräuschsignals (ym) vorsieht.

3. Ein Verfahren zum Erzeugen eines Erzwingungssignals (u3) nach Anspruch 1, wobei der Schritt c3) den Schritt des Subtrahierens des zweiten Signals oder Datenwerts (y) von einem vorbestimmten Restfehlerwert (y0) umfasst, um einen gemessenen Fehlerwert (e) zu erhalten, und des algebraischen Addierens des gemessenen Fehlerwertes (e) oder dessen Verarbeitung (u2) mit dem simulierten Signal oder Datenwert (u1).

4. Ein Verfahren zum Erzeugen eines Erzwingungssignals (u3) nach Anspruch 1 oder 3, wobei der Schritt c2) den Schritt des Filterns des ersten Signals oder Datenwerts (dm) umfasst, um ein gefiltertes Signal (df) zu erzeugen, das nur Frequenzkomponenten in einem vorbestimmten Frequenzbereich umfasst, der eine Teilmenge des Frequenzbereichs des ersten Signals oder Datenwerts (dm) ist.

5. Ein Verfahren zum Erzeugen eines Erzwingungssignals (u3) nach Anspruch 1 oder 3 oder 4, umfassend den Schritt des Erfassens mindestens eines dritten Signals oder Datenwerts (s1, s2), das sich auf eine Schwingung eines dritten Bereichs des Fahrzeugs bezieht, der Schwingungen stromaufwärts des passiven Schwingungsdämpfungselements (30, 30') in Ausbreitungsrichtung der Schwingungen (X) ausgesetzt ist, und des Erzeugens, mittels des numerischen Modells (M), eines simulierten Signals oder Datenwerts (u1) in Bezug auf eine durch das numerische Modell (M) simulierte Beschleunigung als Funktion des ersten Signals oder Datenwerts (dm) und des dritten Signals oder Datenwerts (s1, s2).

6. Ein Verfahren zum Erzeugen eines Erzwingungssignals (u3) nach irgendeinem der Ansprüche von 1 bis 5, wobei das numerische Modell (M) eine mathematische Funktion ist, die einen Steifigkeitsparameter des Dämpfungselements des passiven Dämpfungselements (30, 30') umfasst, und wobei das Verfahren den Schritt des Erfassens eines Signals, das sich auf die Steifigkeit des passiven Dämpfungselements (30, 30') bezieht, und des Zuführens des Signals, das sich auf die Steifigkeit des passiven Dämpfungselements (30, 30') bezieht, zu dem numerischen Modell (M), um das simulierte Signal oder Datenwert (u1) als eine Funktion des Signals zu erzeugen, das sich auf die Steifigkeit des passiven Dämpfungselements (30, 30') bezieht.

7. Ein Verfahren zum Erzeugen eines Erzwingungssignals (u3) nach irgendeinem der Ansprüche von 1 bis 5, wobei das numerische Modell (M) eine mathematische Funktion ist, die einen Fahrzeuggeschwindigkeitsparameter umfasst, und wobei das Verfahren den folgenden Schritt umfasst: Erfassen eines Signals, das sich auf die Fahrzeuggeschwindigkeit bezieht, und Zuführen des Signals, das sich auf die Fahrzeuggeschwindigkeit bezieht, an das numerische Modell (M) zum Erzeugen des simulierten Signals oder Datenwerts (u1) als eine Funktion des Signals, das sich auf die Fahrzeuggeschwindigkeit bezieht.

8. Ein Verfahren zum Erzeugen eines Erzwingungssignals (u3) nach den Ansprüchen 6 und 7.

9. Ein Verfahren zum Erzeugen eines Erzwingungssignals (u3) nach irgendeinem der vorstehenden Ansprüche, umfassend den Schritt des Aktualisierens des numerischen Modells (M) als Funktion des Verarbeitens des ersten Signals oder Datenwerts (dm) und des zweiten Signals oder Datenwerts (y).

10. Ein Verfahren zum Erzeugen eines Erzwingungssignals (u3) nach Anspruch 9, wobei der Schritt des Aktualisierens des numerischen Modells (M) als eine Funktion des Verarbeitens des ersten Signals oder Datenwerts (dm) und des zweiten Signals oder Datenwerts (y) den Schritt des algebraischen Addierens des ersten Signals oder Datenwerts (dm) und des zweiten Signals oder Datenwerts (y) umfasst.

11. Ein aktives Schwingungsreduzierungsverfahren für ein oberes Stoßdämpferlager (10) oder ein Motoraufhängungslager (20) eines Fahrzeugs, umfassend die Verfahrensschritte des Erzeugens eines Erzwingungssignals (u3) nach irgendeinem der vorstehenden Ansprüche und den Schritt des Anwendens einer kontrastierenden mechanischen Einwirkung auf die Schwingungen am Fahrzeug oder am oberen Stoßdämpferlager (10) oder am Motoraufhängungslager (20) des Fahrzeugs in Abhängigkeit vom Erzwingungssignal (u3).

12. Ein Fahrzeug, das ein oberes Stoßdämpferlager (10) oder ein Motoraufhängungslager (20) umfasst, wobei das genannte obere Stoßdämpferlager (10) oder das genannte Motoraufhängungslager (20) des Fahrzeugs mindestens ein passives Schwingungsdämpfungselement (30, 30'), wie z.B. ein Element aus Gummi, umfasst, und wobei das genannte Fahrzeug eine aktive Schwingungsreduzierungsvorrichtung (1) für das genannte obere Stoßdämpferlager (10) oder das genannte Motoraufhängungslager (20) umfasst, wobei die genannte Vorrichtung (1) Folgendes umfasst:
- einen ersten Schwingungsdetektor (101), der dazu geeignet ist, ein erstes Signal oder einen ersten Datenwert (dm) zu erfassen, das bzw. der sich auf die Beschleunigung eines ersten Bereichs (11) des Fahrzeugs bezieht, der stromaufwärts des passiven Schwingungsdämpfungselements (30, 30') in Ausbreitungsrichtung der Schwingungen (X) Schwingungen ausgesetzt ist;
- einen zweiten Schwingungsdetektor (102, 102'), der dazu geeignet ist, ein zweites Signal oder einen zweiten Datenwert (y) zu erfassen, das bzw. der sich auf die Beschleunigung eines zweiten Bereichs (12) des Fahrzeugs oder des oberen Stoßdämpferlagers (10) oder des Motoraufhängungslagers (20) des Fahrzeugs bezieht, wobei der genannte zweite Bereich (12) stromabwärts des passiven Dämpfungselements (30, 30') der Schwingungen (30) in der Ausbreitungsrichtung der Schwingungen (X) Schwingungen ausgesetzt ist;
- eine elektronische Einheit, die Mittel zur Erfassung des ersten Signals oder Datenwerts (dm) oder des zweiten Signals oder Datenwerts (y) umfasst, und so konfiguriert ist, dass sie ein Erzwingungssignal (u3) als Funktion des ersten Signals oder Datenwerts (dm) und des zweiten Signals oder Datenwerts (y) mittels Schritt c1) bis c3) des Verfahrens nach irgendeinem der Ansprüche von 1 bis 10 erzeugt;
- einen Aktuator (4), z.B. einen Schwingungserzeuger, der dazu geeignet ist, das Erzwingungssignal (u3) zu empfangen, und der dazu geeignet ist, eine mechanische Einwirkung zu erzeugen, um den Schwingungen als Funktion des empfangenen Erzwingungssignals (u3) entgegenzuwirken.

13. Ein Fahrzeug, das ein aktives Schwingungsreduktionssystem umfasst, das Folgendes umfasst:
- ein oberes Stoßdämpferlager (10), wobei das genannte obere Stoßdämpferlager (10) einen an der Karosserie (S) des Fahrzeugs verankerbaren Träger (100) und mindestens ein passives Schwingungsdämpfungselement (30) umfasst;
- einen Stoßdämpfer (5), der eine Stoßdämpferstange (51) umfasst, die mit dem oberen Stoßdämpferlager (10) verbunden ist;
- eine aktive Schwingungsreduzierungsvorrichtung (1) für das genannte obere Stoßdämpferlager (10), Folgendes umfassend:
- einen ersten Schwingungsdetektor (101), der dazu geeignet ist, ein erstes Signal oder einen ersten Datenwert (dm) zu erfassen, das bzw. der sich auf die Beschleunigung eines ersten Bereichs (11) des Fahrzeugs bezieht, der stromaufwärts des passiven Schwingungsdämpfungselements (30) in der Ausbreitungsrichtung der Schwingungen (X) Schwingungen ausgesetzt ist;
- einen zweiten Schwingungsdetektor (102, 102'), der dazu geeignet ist, ein zweites Signal oder einen zweiten Datenwert (y) zu erfassen, das bzw. der sich auf die Beschleunigung eines zweiten Bereichs (12) des Fahrzeugs oder des oberen Stoßdämpferlagers (10) des Fahrzeugs bezieht, wobei der genannte zweite Bereich (12) stromabwärts des passiven Dämpfungselements (30) der Schwingungen (30) in Ausbreitungsrichtung der Schwingungen (X) ausgesetzt ist;
- eine elektronische Einheit, die Mittel zur Erfassung des ersten Signals oder Datenwerts (dm) oder des zweiten Signals oder Datenwerts (y) umfasst, und so konfiguriert ist, dass sie ein Erzwingungssignal (u3) als Funktion des ersten Signals oder Datenwerts (dm) und des zweiten Signals oder Datenwerts (y) mittels Schritt c1) bis c3) des Verfahrens nach irgendeinem der Ansprüche von 1 bis 10 erzeugt;
- einen Aktuator (4), z.B. einen Schwingungserzeuger, der dazu geeignet ist, das Erzwingungssignal (u3) zu empfangen, und der dazu geeignet ist, eine mechanische Einwirkung zu erzeugen, um den Schwingungen als Funktion des empfangenen Erzwingungssignals (u3) entgegenzuwirken.
wobei der erste Schwingungsdetektor (101) verbunden ist mit dem ersten Bereich (11) des Fahrzeugs, der Schwingungen ausgesetzt ist, stromaufwärts des passiven Dämpfungselements der Schwingungen (30) in der Ausbreitungsrichtung der Schwingungen;
wobei der zweite Schwingungsdetektor (102, 102') verbunden ist mit dem zweiten Bereich (12) des Fahrzeugs oder dem oberen Stoßdämpferlager (10), der Schwingungen stromabwärts des passiven Dämpfungselements (30, 30') der Schwingungen (30) in der Ausbreitungsrichtung der Schwingungen (X) ausgesetzt ist;
und wobei der Aktuator (4) verbunden ist mit dem zweiten Bereich (12) des Fahrzeugs oder des oberen Stoßdämpferlagers (10), um eine mechanische Einwirkung zu erzeugen, um den Schwingungen als Funktion des empfangenen Erzwingungssignals (u3) entgegenzuwirken.

14. Ein Fahrzeug nach Anspruch 13, wobei der erste Schwingungsdetektor (101) mit der Stoßdämpferstange verbunden ist.

15. Ein Fahrzeug nach Anspruch 13 oder 14, umfassend einen mit dem oberen Stoßdämpferlager (10) verbundenen Vorrichtungsrahmen (21), an dem der Aktuator (4) relativ zur Karosserie (S) des Fahrzeugs und/oder relativ zum Träger (100) des oberen Stoßdämpferlagers (10) beabstandet untergebracht ist.

16. Ein Fahrzeug, das ein aktives Schwingungsreduktionssystem umfasst, das Folgendes umfasst:
- ein Motoraufhängungslager (20), wobei das genannte Motoraufhängungslager (20) einen an der Karosserie (S) des Fahrzeugs verankerbaren Lagerträger (200) und mindestens ein passives Dämpfungselement (30') für die Schwingungen umfasst;
- eine aktive Schwingungsreduzierungsvorrichtung (1) für das genannte Motoraufhängungslager (20), die Folgendes umfasst:
- einen ersten Schwingungsdetektor (101), der dazu geeignet ist, ein erstes Signal oder einen ersten Datenwert (dm) zu erfassen, das bzw. der sich auf die Beschleunigung eines ersten Bereichs (11) des Fahrzeugs bezieht, der stromaufwärts des passiven Schwingungsdämpfungselements (30') in Ausbreitungsrichtung der Schwingungen (X) Schwingungen ausgesetzt ist;
- einen zweiten Schwingungsdetektor (102, 102'), der dazu geeignet ist, ein zweites Signal oder einen zweiten Datenwert (y) zu erfassen, das bzw. der sich auf die Beschleunigung eines zweiten Bereichs (12) des Fahrzeugs oder des Motoraufhängungslagers (20) des Fahrzeugs bezieht, wobei der genannte zweite Bereich (12) stromabwärts des passiven Dämpfungselements (30') der Schwingungen (30) in der Ausbreitungsrichtung der Schwingungen (X) Schwingungen ausgesetzt ist;
- eine elektronische Einheit, die Mittel zur Erfassung des ersten Signals oder Datenwerts (dm) oder des zweiten Signals oder Datenwerts (y) umfasst, und so konfiguriert ist, dass sie ein Erzwingungssignal (u3) als Funktion des ersten Signals oder Datenwerts (dm) und des zweiten Signals oder Datenwerts (y) mittels Schritt c1) bis c3) des Verfahrens nach irgendeinem der Ansprüche von 1 bis 10 erzeugt;
- einen Aktuator (4), z.B. einen Schwingungserzeuger, der dazu geeignet ist, das Erzwingungssignal (u3) zu empfangen, und der dazu geeignet ist, eine mechanische Einwirkung zu erzeugen, um den Schwingungen als Funktion des empfangenen Erzwingungssignals (u3) entgegenzuwirken;
wobei der erste Schwingungsdetektor (101) verbunden ist mit dem ersten Bereich (11) des Fahrzeugs, der Schwingungen ausgesetzt ist, stromaufwärts des passiven Dämpfungselements der Schwingungen (30, 30') in der Ausbreitungsrichtung der Schwingungen;
wobei der zweite Schwingungsdetektor (102, 102') verbunden ist mit dem zweiten Bereich (12) des Fahrzeugs oder des Motoraufhängungslagers (20);
und wobei der Aktuator (4), z.B. einen Schwingungserzeuger, verbunden ist mit dem zweiten Bereich (12) des Fahrzeugs oder des Motoraufhängungslagers (20), um eine mechanische Einwirkung zu erzeugen, um den Schwingungen als Funktion des empfangenen Erzwingungssignals (u3) entgegenzuwirken.

## Revendications

1. Méthode de génération d'un signal de forçage (u3) pour la réduction de vibration active pour un support supérieur d'amortisseur (10) ou pour un support de suspension moteur (20) d'un véhicule, ladite méthode comprenant les étapes suivantes :
la fourniture du véhicule comportant le support supérieur d'amortisseur (10) ou le support de suspension moteur (20), ledit support supérieur d'amortisseur (10) ou ledit support de suspension moteur (20) du véhicule comprenant au moins un élément d'amortissement de vibration passif (30, 30'), comme un élément en caoutchouc,
dans laquelle, ayant défini une direction de propagation des vibrations (X), comme la direction qui s'étend de la surface de route (R) sur laquelle le véhicule se déplace vers la carrosserie (S) du véhicule, en passant à travers l'élément d'amortissement passif (30), ou comme la direction qui s'étend depuis le moteur du véhicule vers la carrosserie (S) du véhicule en passant à travers l'élément d'amortissement passif (30'),
ladite méthode comprend les étapes suivantes :
a) détecter un premier signal ou donnée (dm) relatif à l'accélération d'une première région (11) du véhicule soumise à des vibrations en amont de l'élément d'amortissement de vibration passif (30, 30') dans la direction de propagation des vibrations (X) ;
b) détecter un deuxième signal ou donnée (y) relatif à l'accélération d'une deuxième région (12) du véhicule ou du support supérieur d'amortisseur (10) ou du support de suspension moteur (20) du véhicule, ladite deuxième région (12) étant soumise à des vibrations en aval de l'élément d'amortissement passif (30, 30') parmi les vibrations (30) dans la direction de propagation des vibrations (X) ;
c) sur une unité électronique, générer un signal de forçage (u3) en fonction du premier signal ou donnée (dm) et du deuxième signal ou donnée (y), ledit signal de forçage (u3) étant apte à activer un dispositif vibrateur (A) pour compenser au moins partiellement les vibrations agissant sur la première région (11) et/ou la deuxième région (12),
**caractérisée en ce que** l'étape c) comprend, sur l'unité électronique, les étapes suivantes :
c1) fournir un modèle numérique (M) configuré pour simuler la réponse mécanique de l'élément d'amortissement passif (30, 30') en fonction du premier signal ou donnée (dm) relatif à l'accélération de la première région (11) ;
c2) au moyen du modèle numérique (M), générer un signal ou donnée simulé (u1) lié à une accélération simulée par le modèle numérique (M) en fonction du premier signal ou donnée (dm) ;
c3) générer un signal de forçage (u3) en fonction du premier signal ou donnée (dm), du deuxième signal ou donnée (y) et du signal ou donnée simulé (u1),
dans laquelle ledit modèle numérique (M) est une fonction mathématique comprenant un paramètre de température de l'élément d'amortissement passif (30, 30') et dans laquelle la méthode comprend l'étape de détecter un signal relatif à la température (T) d'une région du véhicule et/ou de l'élément d'amortissement passif (30, 30') et/ou du support supérieur d'amortisseur (10) ou du support de suspension moteur (20) et fournir le signal de température (T) au modèle numérique (M) pour générer le signal ou donnée simulé (u1) en fonction du signal de température (T).

2. Méthode de génération d'un signal de forçage (u3) selon la revendication 1, dans laquelle, avant l'étape c), la méthode comprend l'étape suivante :
b1) détecter un signal de bruit d'habitacle (ym) au moyen d'un microphone placé à proximité ou à l'intérieur de l'habitacle du véhicule ;
et dans laquelle, à l'étape c), l'étape de générer le signal de forçage (u3) prévoit de générer le signal de forçage (u3) en fonction du premier signal ou donnée (dm), du deuxième signal ou donnée (y) et du signal de bruit d'habitacle (ym).

3. Méthode de génération d'un signal de forçage (u3) selon la revendication 1, dans laquelle l'étape c3) comprend l'étape de soustraire le deuxième signal ou donnée (y) d'une valeur d'erreur résiduelle prédéterminée (y0) pour obtenir une valeur d'erreur mesurée (e) et ajouter algébriquement la valeur d'erreur mesurée (e) ou le traitement (u2) de celle-ci au signal ou donnée simulé (u1).

4. Méthode de génération d'un signal de forçage (u3) selon la revendication 1 ou 3, dans laquelle l'étape c2) comprend l'étape de filtrer le premier signal ou donnée (dm) pour générer un signal filtré (df) comprenant uniquement des composantes de fréquence dans une plage de fréquence prédéterminée, qui est un sous-ensemble de la plage de fréquence du premier signal ou donnée (dm).

5. Méthode de génération d'un signal de forçage (u3) selon la revendication 1 ou 3 ou 4, comprenant l'étape de détecter au moins un troisième signal ou donnée (s1, s2) relatif à une vibration d'une troisième région du véhicule soumise à des vibrations en amont de l'élément d'amortissement de vibration passif (30, 30') dans la direction de propagation des vibrations (X), et, au moyen du modèle numérique (M), générer un signal ou donnée simulé (u1) relatif à une accélération simulée par le modèle numérique (M) en fonction du premier signal ou donnée (dm) et du troisième signal ou donnée (s1, s2).

6. Méthode de génération d'un signal de forçage (u3) selon l'une quelconque des revendications 1 à 5, dans laquelle le modèle numérique (M) est une fonction mathématique comprenant un paramètre de rigidité de l'élément d'amortissement de l'élément d'amortissement passif (30, 30') et dans laquelle la méthode comprend l'étape de détecter un signal relatif à la rigidité de l'élément d'amortissement passif (30, 30') et de fournir le signal relatif à la rigidité de l'élément d'amortissement passif (30, 30') au modèle numérique (M) pour générer le signal ou donnée simulé (u1) en fonction du signal relatif à la rigidité de l'élément d'amortissement passif (30, 30').

7. Méthode de génération d'un signal de forçage (u3) selon l'une quelconque des revendications 1 à 5, dans laquelle le modèle numérique (M) est une fonction mathématique comprenant un paramètre de vitesse de véhicule et dans laquelle la méthode comprend l'étape de détecter un signal relatif à la vitesse de véhicule et de fournir le signal relatif à la vitesse de véhicule au modèle numérique (M) pour générer le signal ou donnée simulé (u1) en fonction du signal relatif à la vitesse de véhicule.

8. Méthode de génération d'un signal de forçage (u3) selon les revendications 6 et 7.

9. Méthode de génération d'un signal de forçage (u3) selon l'une quelconque des revendications précédentes, comprenant l'étape de mettre à jour le modèle numérique (M) en fonction du traitement du premier signal ou donnée (dm) et du deuxième signal ou donnée (y).

10. Méthode de génération d'un signal de forçage (u3) selon la revendication 9, dans laquelle l'étape de mettre à jour le modèle numérique (M) en fonction du traitement du premier signal ou donnée (dm) et du deuxième signal ou donnée (y) comprend l'étape d'additionner algébriquement le premier signal ou donnée (dm) et le deuxième signal ou donnée (y).

11. Méthode de réduction de vibration active pour un support supérieur d'amortisseur (10) ou un support de suspension moteur (20) d'un véhicule, comprenant les étapes de la méthode de génération d'un signal de forçage (u3) selon l'une quelconque des revendications précédentes et l'étape d'appliquer une action d'opposition mécanique aux vibrations sur le véhicule ou le support supérieur d'amortisseur (10) ou le support de suspension moteur (20) du véhicule en fonction du signal de forçage (u3).

12. Véhicule comprenant un support supérieur d'amortisseur (10) ou un support de suspension moteur (20), ledit support supérieur d'amortisseur (10) ou ledit support de suspension moteur (20) du véhicule comprenant au moins un élément d'amortissement de vibration passif (30, 30'), comme un élément en caoutchouc, et ledit véhicule comprenant un appareil de réduction de vibration active (1) pour ledit support supérieur d'amortisseur (10) ou ledit support de suspension moteur (20),
ledit appareil (1) comprenant :
- un premier détecteur de vibration (101) apte à détecter un premier signal ou donnée (dm) relatif à l'accélération d'une première région (11) du véhicule soumise à des vibrations en amont de l'élément d'amortissement de vibration passif (30, 30') dans la direction de propagation des vibrations (X) ;
- un deuxième détecteur de vibration (102, 102') apte à détecter un deuxième signal ou donnée (y) relatif à l'accélération d'une deuxième région (12) du véhicule ou du support supérieur d'amortisseur (10) ou du support de suspension moteur (20) du véhicule, ladite deuxième région (12) étant soumise à des vibrations en aval de l'élément d'amortissement passif (30, 30') parmi les vibrations (30) dans la direction de propagation des vibrations (X) ;
- une unité électronique comprenant des moyens pour l'acquisition du premier signal ou donnée (dm) ou du deuxième signal ou donnée (y) et configurée pour générer un signal de forçage (u3) en fonction du premier signal ou donnée (dm) et du deuxième signal ou donnée (y) au moyen des étapes c1) à c3) de la méthode selon l'une quelconque des revendications 1 à 10 ;
- un actionneur (4), par exemple un vibrateur, apte à recevoir le signal de forçage (u3) et apte à générer une action mécanique pour s'opposer aux vibrations en fonction du signal de forçage (u3) reçu.

13. Véhicule comprenant un système de réduction de vibration active comprenant :
- un support supérieur d'amortisseur (10), ledit support supérieur d'amortisseur (10) comprenant un élément d'appui (100) pouvant être ancré à la carrosserie (S) du véhicule et au moins un élément d'amortissement de vibration passif (30) ;
- un amortisseur (5) comprenant une tige d'amortisseur (51), reliée au support supérieur d'amortisseur (10) ;
- un appareil de réduction de vibration active (1) pour ledit support supérieur d'amortisseur (10), comprenant :
- un premier détecteur de vibration (101) apte à détecter un premier signal ou donnée (dm) relatif à l'accélération d'une première région (11) du véhicule soumise à des vibrations en amont de l'élément d'amortissement de vibration passif (30) dans la direction de propagation des vibrations (X) ;
- un deuxième détecteur de vibration (102, 102') apte à détecter un deuxième signal ou donnée (y) relatif à l'accélération d'une deuxième région (12) du véhicule ou du support supérieur d'amortisseur (10) du véhicule, ladite deuxième région (12) étant soumise à des vibrations en aval de l'élément d'amortissement passif (30) parmi les vibrations (30) dans la direction de propagation des vibrations (X) ;
- une unité électronique comprenant des moyens pour l'acquisition du premier signal ou donnée (dm) ou du deuxième signal ou donnée (y) et configurée pour générer un signal de forçage (u3) en fonction du premier signal ou donnée (dm) et du deuxième signal ou donnée (y) au moyen des étapes c1) à c3) de la méthode selon l'une quelconque des revendications 1 à 10 ;
- un actionneur (4), par exemple un vibrateur, apte à recevoir le signal de forçage (u3) et apte à générer une action mécanique pour s'opposer aux vibrations en fonction du signal de forçage (u3) reçu ;
dans lequel le premier détecteur de vibration (101) est relié à la première région (11) du véhicule soumise à des vibrations en amont de l'élément d'amortissement passif parmi les vibrations (30) dans la direction de propagation des vibrations ;
dans lequel le deuxième détecteur de vibration (102, 102') est relié à la deuxième région (12) du véhicule ou du support supérieur d'amortisseur (10) soumise à des vibrations en aval de l'élément d'amortissement passif (30, 30') parmi les vibrations (30) dans la direction de propagation des vibrations (X) ;
et dans lequel l'actionneur (4) est relié à la deuxième région (12) du véhicule ou du support supérieur d'amortisseur (10) pour générer une action mécanique pour s'opposer aux vibrations en fonction du signal de forçage (u3) reçu.

14. Véhicule selon la revendication 13, dans lequel le premier détecteur de vibration (101) est relié à la tige d'amortisseur.

15. Véhicule selon la revendication 13 ou 14, comprenant un châssis d'appareil (21), joint au support supérieur d'amortisseur (10), sur lequel l'actionneur (4) est logé en étant espacé de la carrosserie (S) du véhicule et/ou de l'élément d'appui (100) du support supérieur d'amortisseur (10).

16. Véhicule comprenant un système de réduction de vibration active comprenant :
- un support de suspension moteur (20), ledit support de suspension moteur (20) comprenant un élément d'appui de support (200) pouvant être ancré à la carrosserie (S) du véhicule et au moins un élément d'amortissement passif (30') des vibrations ;
- un appareil de réduction de vibration active (1) pour ledit support de suspension moteur (20) comprenant :
- un premier détecteur de vibration (101) apte à détecter un premier signal ou donnée (dm) relatif à l'accélération d'une première région (11) du véhicule soumise à des vibrations en amont de l'élément d'amortissement de vibration passif (30') dans la direction de propagation des vibrations (X) ;
- un deuxième détecteur de vibration (102, 102') apte à détecter un deuxième signal ou donnée (y) relatif à l'accélération d'une deuxième région (12) du véhicule ou du support de suspension moteur (20) du véhicule, ladite deuxième région (12) étant soumise à des vibrations en aval de l'élément d'amortissement passif (30') parmi les vibrations (30) dans la direction de propagation des vibrations (X) ;
- une unité électronique comprenant des moyens pour l'acquisition du premier signal ou donnée (dm) ou du deuxième signal ou donnée (y) et configurée pour générer un signal de forçage (u3) en fonction du premier signal ou donnée (dm) et du deuxième signal ou donnée (y) au moyen des étapes c1) à c3) de la méthode selon l'une quelconque des revendications 1 à 10 ;
- un actionneur (4), par exemple un vibrateur, apte à recevoir le signal de forçage (u3) et apte à générer une action mécanique pour s'opposer aux vibrations en fonction du signal de forçage (u3) reçu ;
dans lequel le premier détecteur de vibration (101) est relié à la première région (11) du véhicule soumise à des vibrations en amont de l'élément d'amortissement de vibration passif (30, 30') dans la direction de propagation des vibrations ;
dans lequel le deuxième détecteur de vibration (102, 102') est relié à la deuxième région (12) du véhicule ou du support de suspension moteur (20) ;
et dans lequel l'actionneur (4), par exemple un vibrateur, est relié à la deuxième région (12) du véhicule ou du support de suspension moteur (20) pour générer une action mécanique pour s'opposer aux vibrations en fonction du signal de forçage (u3) reçu.
